# EUROPÄISCHE PATENTANMELDUNG

(11) **EP 0 860 624 A2**
(43) Veröffentlichungstag der Anmeldung: **26.08.1998**
(21) Anmeldenummer: 97121431.7
(22) Anmeldetag: 05.12.1997
(51) Int. Cl.: F16D 48/06

(54) **Verfahren zur Steuerung einer automatisierten Kupplung im Nicht-Zug-Betrieb**

(30) Priorität: 20.02.1997 DE 19706628
(71) Anmelder: Volkswagen Aktiengesellschaft, 38436 Wolfsburg (DE)
(72) Erfinder: Rüdiger, Reinhard, Dipl.-Ing., 31226 Peine (DE)

(57) **Zusammenfassung**

Die vorliegende Erfindung betrifft ein Verfahren zur Steuerung einer automatisierten Kupplung eines Kraftfahrzeuges. Dabei wird zur Verhinderung von die Fahrsicherheit gefährdenden Fahrzuständen die Kupplung geöffnet, sobald das Fahrzeug in den Zustand "kein Zugbetrieb" wechselt.

## Beschreibung

Die Erfindung betrifft ein Verfahren zur Steuerung einer automatisierten Kupplung eines Kraftfahrzeuges.

Im Fahrbetrieb eines Kraftfahrzeuges sind antriebsmäßig grundsätzlich drei verschiedene Zustände denkbar: So gibt es einen Zugbetrieb, in dem auf das Kraftfahrzeug eine von einem Antriebsaggregat erzeugte Antriebskraft wirkt, die das Fahrzeug beschleunigt oder gegen Reibung und Windwiderstand auf konstanter Geschwindigkeit hält. Ferner gibt es einen Schubbetrieb, indem das Fahrzeug allein durch die Trägheit der Fahrzeugmasse und eventuelle Hangabtriebskräfte angetrieben wird. Die Fahrgeschwindigkeit kann sich dabei erhöhen, gleich bleiben oder vermindern. Ferner gibt es einen Bremsbetrieb, in dem das Fahrzeug durch Betätigen der Fußbremse abgebremst wird. Der Schubbetrieb und der Bremsbetrieb können gleichzeitig auftreten und sich gegenseitig überlagern.

Es kommen in Kraftfahrzeugen häufig Systeme zum Einsatz, die im Schubbetrieb zur Kraftstoffeinsparung die Kraftstoffzufuhr an das Antriebsaggregat unterbrechen bzw. stoppen, so daß vom Antriebsaggregat keine beschleunigende Kraft mehr in Fahrtrichtung über Getriebeeinganswelle und Getriebe auf die Antriebsräder wirken. Statt dessen geht vom Antriebsaggregat aufgrund von Reibung, Verdichtungstakte und Massenträgheit eine die Räder bremsende Kraft bzw. ein Motorschleppmoment aus. Hierbei kann es im Schubbetrieb bei eingekuppelter Kupplung oder beim Einkuppeln im Schub bzw. im Schubbetrieb vor allem bei beispielsweise durch Schmutz, Wasser, Schnee und/oder Eis rutschiger Fahrbahn zu einem Blockieren der Antriebsräder kommen. Dieser Fahrzustand kann bis zu einer Unkontrollierbarkeit des Fahrzeuges führen.

Aus der DE 40 42 091 C2 ist nun beispielsweise eine Steuereinrichtung für die Drehzahl einer Verbrennungskraftmaschine für ein Motorfahrzeug bekannt. Hierbei wird zum Verhindern des Abwürgens eines Antriebsmotors beim schnellen Abbremsen des Motorfahrzeuges erst bei Detektion des Blockierens von Rädern die Kupplung automatisch geöffnet.

In der EP 0 106 112 A1 wird ein Antiblockiersystem beschrieben, welches während der Antiblockierregelung, d.h. während einer Vollbremsung, die Bremswirkung eines Motors auf Antriebsräder zumindest teilweise wenigstens verkleinert.

Beide Systeme sind jedoch nur in der Extremsituation der Voll- bzw. Notbremsung eines Kraftfahrzeuges wirksam und es ist Nachteilig, daß keine Vorkehrungen dafür getroffen sind, daß im Schubbetrieb an sich ein Blockieren der Räder wirksam verhindert wird.

Der vorliegenden Erfindung liegt daher die Aufgabe zugrunde, ein Verfahren der obengenannten Art zur Verfügung zu stellen, wobei die obengenannten Nachteile überwunden und gefährliche Fahrzustände im Schubbetrieb vermieden werden.

Diese Aufgabe wird erfindungsgemäß durch ein Verfahren der o.g. Art mit den in Anspruch 1 gekennzeichneten Merkmalen gelöst.

Dazu ist es erfindungsgemäß vorgesehen, daß die Kupplung geöffnet wird sobald das Fahrzeug in den Zustand "kein Zugbetrieb" wechselt.

Unter dem Zustand "kein Zugbetrieb" ist dabei jeder Fahrzustand zu verstehen in dem das Antriebsaggregat keine Kraft in Fahrtrichtung auf die Antriebsräder ausübt.

Dies hat den Vorteil, daß das Kraftfahrzeug auch bei Glätte- und Blockiergefahr während des Schubbetriebes oder beim Einkuppeln lenkbar bleibt. Ferner wird ein Bremsvorgang nicht durch den eingekuppelten Verbrennungsmotor gestört oder gar verlängert. Zusätzlich werden gleichzeitig Schäden am Getriebe und Motor durch Vollbremsung und Stillstand des Motors wirksam vermieden.

Um einen dauerhaft sicheren Betrieb im Zustand "kein Zugbetrieb" zu erzielen bleibt die Kupplung geöffnet, solange sich des Kraftfahrzeug im Zustand "kein Zugbetrieb" befindet und wird zweckmäßigerweise für einen kontinuierlichen Fahrbetrieb wieder geschlossen, sobald zum Beispiel durch Auslenken des Fahrpedals oder durch Betätigen des Gangschalthebels einem Kupplungssteuerungsgerät signalisiert wird, daß der Zustand "kein Zugbetrieb" beendet werden soll.

In einer besonders vorteilhaften Ausführungsform wird der Zustand "kein Zugbetrieb" dadurch erkannt, daß sich die Drehzahl eines Antriebsmotors trotz Nullgas erhöht, daß an einer Getriebeeingangswelle eine negative Beschleunigung detektiert wird, daß an wenigstens einem Rad des Kraftfahrzeuges eine negative Beschleunigung detektiert wird und/oder daß eine Betätigung eines Bremspedals detektiert wird

Zweckmäßigerweise wird dabei der Zustand "kein Zugbetrieb" nur dann festgestellt, wenn gleichzeitig zu anderen Parametern eine Bewegung des Kraftfahrzeuges detektiert wird.

Weitere Merkmale, Vorteile und vorteilhafte Ausgestaltungen der Erfindung ergeben sich aus den abhängigen Ansprüchen, sowie aus der nachstehenden Beschreibung der Erfindung.

Bei Kraftfahrzeugen mit automatisierter Kupplung wird diese in einer kritischen Schubphase von einer durch das genannte Steuergerät angesteuerten Kupplungsbetätigungsvorrichtung geöffnet und bis zur nächsten Zugphase (Antriebsphase) offen gehalten.

Kritische Schubphasen sind beispielsweise der Beginn und das Ende eines antriebslosen Fahrbetriebs, also beispielsweise wenn der Fahrer bei normalem Vorwärtsfahrbetrieb das Gas- bzw. Fahrpedal losläßt oder wieder betätigt.

Die Erkennung des kritischen Zustands erfolgt durch Auswerten des Fahrzustandes. Wird beispielsweise ein Schubbetrieb detektiert, zeigt eine Kupplungsposition eine beginnende Kraftübertragung an oder dreht der Motor trotz Nullgas hoch während sich das Kraftfahrzeug bewegt, dann liegt eine kritische Schubphase vor und der Zustand "kein Zugbetrieb" wird erkannt.

Gleiches gilt, wenn im normalen Fahrbetrieb nicht vorkommende negative Beschleunigungen einer Getriebeeingangswelle oder der Räder erfaßt werden.

Das Verfahren eignet sich ferner dazu, bei zusätzlich noch getretener Bremse auf Vollbremsung zu erkennen und die Kupplung so früh zu öffnen, daß der Bremsvorgang nicht durch das Bremsmoment eines noch eingekuppelten Verbrennungsmotors verlängert wird.

## Patentansprüche

1. Verfahren zur Steuerung einer automatisierten Kupplung eines Kraftfahrzeuges,
dadurch gekennzeichnet, daß
die Kupplung geöffnet wird sobald das Fahrzeug in den Zustand "kein Zugbetrieb" wechselt.

2. Verfahren nach Anspruch 1,
dadurch gekennzeichnet, daß
die Kupplung geöffnet bleibt, solange sich des Kraftfahrzeug im Zustand "kein Zugbetrieb" befindet.

3. Verfahren nach Anspruch 1 oder 2,
dadurch gekennzeichnet, daß
die Kupplung geschlossen wird, sobald sich das Kraftfahrzeug nicht mehr im Zustand "kein Zugbetrieb" befindet.

4. Verfahren nach einem der vorstehenden Ansprüche,
dadurch gekennzeichnet, daß
der Zustand "kein Zugbetrieb" dadurch erkannt wird, daß sich eine Drehzahl eines Antriebsmotors trotz nicht ausgelenktem Fahrpedal erhöht.

5. Verfahren nach einem der vorstehenden Ansprüche,
dadurch gekennzeichnet, daß
der Zustand "kein Zugbetrieb" dadurch erkannt wird, daß an einer Getriebeeingangswelle eine negative Beschleunigung detektiert wird.

6. Verfahren nach einem der vorstehenden Ansprüche,
dadurch gekennzeichnet, daß
der Zustand "kein Zugbetrieb" dadurch erkannt wird, daß an wenigstens einem Rad des Kraftfahrzeuges eine negative Beschleunigung detektiert wird.

7. Verfahren nach einem der vorstehenden Ansprüche,
dadurch gekennzeichnet, daß
der Zustand "kein Zugbetrieb" dadurch erkannt wird, daß eine Betätigung eines Bremspedals detektiert wird.

8. Verfahren nach einem der vorstehenden Ansprüche,
dadurch gekennzeichnet, daß
der Zustand "kein Zugbetrieb" nur dann festgestellt wird, wenn eine Bewegung des Kraftfahrzeuges detektiert wird.
